# EUROPÄISCHE PATENTANMELDUNG

(11) **EP 0 950 918 A1**
(43) Veröffentlichungstag der Anmeldung: **20.10.1999**
(21) Anmeldenummer: 99107154.9
(22) Anmeldetag: 13.04.1999
(51) Int. Cl.: G03B 15/00, H04N 7/18

(54) **Kamera zur Aufnahme von Luftbildern**

(30) Priorität: 15.04.1998 DE 19816561
(71) Anmelder: Teuchert, Wolf D., Dr., 89551 Königsbronn (DE)
(72) Erfinder: Teuchert, Wolf D., Dr., 89551 Königsbronn (DE)
(74) Vertreter: KOHLER SCHMID + PARTNER

(57) **Zusammenfassung**

Eine Kamera (1), insbesondere zur Aufnahme von Luftbildern aus Flugzeugen, weist ein Objektiv (2), mindestens zwei Flächendetektoren (3a, 3b) und mindestens einen jeweils im Strahlengang zwischen dem Objektiv (2) und den zwei Flächendetektoren (3a, 3b) vorgesehenen Strahlteilor (4) auf, der das auftreffende Lichtbündel (5) in Richtung auf die beiden Flächendetektoren (3a, 3b) aufteilt, wobei am einen Flächendetektor (3b) die eine Lichtbündelhälfte (5a) und am anderen Flächendetektor (3a) die andere Lichtbündelhälfte (5b) des Lichtbündels (5) auftrifft. Die zwei Flächendetektoren werden jeweils mit unterschiedlichen Bildhälften des Bildes bzw. Lichtbündels belichtet. Dies ermöglicht eine schnelle Bildaufnahme durch die gleichzeitige Belichtung der Flächendetektoren, eine hohe Empfindlichkeit durch die gleicttzeitige Belichtung aller Detektoren, eine stabile Geometrie in zwei Dimensionen und eine im Vergleich zu einem einzigen Flächendetektor höhere Bildwiederholrate durch schnelleres Auslesen aus zwei kleineren Detektoren.

## Beschreibung

Die Erfindung betrifft eine Kamera, insbesondere zur Aufnahme von Luftbildern aus Flugzeugen.

Zur Aufnahme von Luftbildern aus Flugzeugen werden heute noch vorwiegend Kameras mit Luftbildfilm verwendet, jedoch wird in steigendem Maß digitale Technik eingesetzt. Die digitale Technik bietet viele Vorteile, die hauptsächlich in der Fähigkeit liegen, während des Flugs Bilder aufzunehmen und wiederzugeben, sie zum Boden zu übertragen, digital noch an Bord weiterzuverarbeiten und digital am Boden auszuwerten.

Der Stand der digitalen, opto-elektronischen (kurz optronischen) Kameratechnik wird derzeit durch vier Technologien geprägt:
- CCD(Charge Coupled Device)-Zeilenkameras
- Fernsehkamera
- elektronische Kleinbildkameras
- Kameras mit großflächigen CCD-Flächendetektoren.

Bei Zeilenkameras wird ein Abtastverfahren eingesetzt, das in Form eines breiten Schiebebesens (pushbroom) das ganze Bild in einem geraden Zug überdeckt. Detektoren mit CCD-Zeilen bieten durch die lineare Anordnung der Elemente die beste Detektorqualität, die höchste Speicherkapazität pro Element und beste Bildgüte in festen Anordnungen. Sie ist jedoch für viele Bereiche der Luftbildfotografie durch die von einem Zeilenbild zum nächsten nicht zusammenhängenden, linearen Bildelemente in ihrer Genauigkeit limitiert. Für schnelle Bildfolgen ist die Technologie durch das serielle Abtastprinzip mit der Verknüpfung von Bildaufnehmen und Bildauslesen, damit dem hohen Zeitbedarf und der geringen Empfindlichkeit nicht geeignet.

Durch den Einsatz von Flächendetektoren erreicht man eine Entkopplung von Aufnahme pro Element und Ausleseprozeß. Zwar sind Flächendetektoren bezogen auf das einzelne Detektorelement nicht so leistungsstark wie diejenigen in CCD-Zeilen, doch bieten Flächendetektoren durch die zweidimensionale Anordnung eine Reihe von Vorteilen. Da die Bildaufnahme parallel für alle Detektoren erfolgt, wird viel Zeit gewonnen, so daß länger belichtet und so eine Empfindlichkeitssteigerung erreicht werden kann. Es ist leicht möglich, solche Kameras mit einer elektronischen Bildwanderungskompensation (engl. FMC = Forward Motion Compensation) auszustatten, indem das Bild während der Aufnahme elektronisch verschoben wird. Die maximal erreichbare Geschwindigkeit ist allerdings durch die maximale Taktrate des Detektors begrenzt.

Fernsehkameras beruhen auf CCD-Detektoren in der sogenannten "Frame Transfer"-Technologie und bestehen aus einem CCD-Detektor mit zwei nebeneinander liegenden Bildspeichern, von denen einer lichtdicht abgedeckt, der andere mit einem Fenster versehen und lichtempfindlich ist. Bei der Bildaufnahme werden periodisch Bilder im Aufnahme-CCD aufgenommen, dann in den daneben liegenden Speicher-CCD verschoben und von dort sukzessive ausgelesen. Das Auslesen kann im Zeilensprungverfahren (erst alle ungeraden, dann alle geraden Zeilen entsprechend dem Bildaufbau im Fernsehen) oder im progressiven Verfahren, bei dem alle Zeilen nacheinander ausgelesen werden, erfolgen. Die Bildfolge beträgt bei der europäischen Fernsehnorm im Zeilensprungverfahren 50 Halbbilder pro Sekunde, im progressiven Verfahren 25 Vollbilder pro Sekunde. Fernsehkameras spielen wegen der geringen Detektorabmessungen für die Luftbildfotografie keine Rolle.

Die elektronische Kleinbildfotografie beginnt mit Detektoren zu 1K x 1,5K bzw. 2K x 3K Detektorelementen (1K = 1024) inzwischen die Luftbildaufnahme zu erobern. Dabei wird die "Full Frame"-Technologie eingesetzt, d.h., es gibt kein separates Auslese-CCD.

Eine Erweiterung dieser Technologie kommt aus dem Bereich der elektronischen Kameras für die militärische Luftbildaufnahme. Hier sind "Full Frame"-Detektoren mit 4K x 4K, 5K x 5K oder mehr im Einsatz. Durch die großen Abmessungen dieser Detektoren steigen die Kapazitäten der zu treibenden CCD-Zeilenstrukturen derart an, daß keine höhere Geschwindigkeit für das Bildauslesen erreicht werden kann. Weiterhin sinkt die Ausbeute bei der Produktion der Detektoren auf ein Minimum, so daß die Kosten ins Unermeßliche steigen.

Die Anwendung in der Luftbildaufnahme im Mittel- und Nahbereich bedeutet eine sehr hohe Datenmenge, die sich durch die schnelle Bildfolge, die große Auflösung bei gleichzeitig großem Sichtfeld und die lange Flugdauer ergibt. Das größte Hindernis ist dabei die Forderung nach einer Kompensation der Bildwanderung, um keine Verschlechterung der Bildschärfe durch die Bildbewegung zu erleiden. Die Entwicklung verlief so, daß parallel Auslesegeschwindigkeit und Bildelementezahl in gleicher Weise gesteigert wurden. Typische Werte liegen heute bei ca. 40 MHz und mehreren Tausend Detektorelementen in zwei Dimensionen. Als typische Maßzahl für die Bildwanderungsgeschwindigkeit wird das Verhältnis v/h der Fluggeschwindigkeit v und der Flughöhe h angegeben. Je nach Brennweite liegt diese Zahl seit mindestens 15 Jahren bei einem v/h-Wert von 0,2 bis 1 rad/s, ohne daß wesentliche Fortschritte erzielt worden wären. Zum Vergleich: die schnellsten Luftbild-Aufklärungskameras auf Filmbasis erreichen Werte bis zu v/h = 10 rad/s.

Es ist daher die Aufgabe der Erfindung, eine Kamera mit einem Flächendetektor derart zu verbessern, daß das Auslesen des Flächendetektors möglichst schnell erfolgen kann.

Die oben genannte Aufgabe wird erfindungsgemäß gelöst durch eine Kamera mit einem Objektiv, mindestens zwei Flächendetektoren und mindestens einem, jeweils im Strahlengang zwischen dem Objektiv und den zwei Flächendetektoren vorgesehenen (zweiten) Strahlteiler, der das auftreffende Lichtbündel in Richtung auf die beiden Flächendetektoren auf-teilt, wobei am einen Flächendetektor die eine Lichtbündelhälfte und am anderen Flächendetektor die andere Lichtbündelhälfte des Lichtbündels auftrifft.

Der mit der Erfindung erzielte Vorteil besteht darin, daß die zwei Flächendetektoren jeweils mit unterschiedlichen Hälften des Bildes bzw. Lichtbündels belichtet werden. Dies ermöglicht eine schnelle Bildaufnahme durch die gleichzeitige Belichtung der Flächendetektoren bzw. aller Bildelemente, eine hohe Empfindlichkeit durch die gleichzeitige Belichtung aller Detektoren, eine stabile Geometrie in zwei Dimensionen und eine im Vergleich zu einem einzigen Flächendetektor höhere Bildwiederholrate durch schnelleres Auslesen aus zwei kleineren Detektoren meist über mehrere Ausgänge pro Detektor. Die Flächendetektoren sollten ein Bildformat (z.B. 6 x 6 cm² oder das Luftbildformat 9,5 x 9,5 Zoll²) abdecken, für das kommerzielle Objektive verfügbar sind.

Vorzugsweise ist der zweite Strahlteiler ein physikalischer Strahlteiler, der das Lichtbündel in zwei Teile aufteilt, wobei von dem einen Teil die eine Lichtbündelhälfte auf den einen Flächendetektor und von dem anderen Teil die andere Lichtbündelhälfte auf den anderen Flächendetektor abgebildet wird. Dieser physikalische Strahlteiler kann z.B. ein teildurchlässiger, ein mit mehreren teilverspiegelten Flächen unterschiedlicher Reflektivität bzw. Transmission versehener oder insbesondere ein dichroitischer Spiegel sein. Bei bevorzugten Ausführungsformen der Erfindung ist im Strahlengang vor zwei zweiten Strahlteilern ein weiterer (erster) Strahlteiler vorgesehen, der das auftreffende Lichtbündel auf die beiden zweiten Strahlteiler aufteilt. Durch den ersten und die beiden zweiten Strahlteiler ist die Zerlegung des Bildes auf vier Flächendetektoren möglich.

Vorzugsweise ist der erste Strahlteiler ein geometrischer Strahlteiler, der das auftreffende Lichtbündel in eine Lichtbündelhälfte für den einen zweiten Strahlteiler und in eine Lichtbündelhälfte für den anderen zweiten Strahlteiler unterteilt. Dieser geometrische Strahlteiler kann z.B. ein nur in die eine Strahlenhälfte eingreifender Spiegel sein. Aus Intensitätsgründen erfolgt im Strahlengang zwischen Objektiv und den Flächendetektoren zunächst die geometrische und dann die physikalische Strahlteilung.

Um die nutzbare Fläche noch weiter zu vergrößern, kann eine mehrstufige (3fach oder höher) Kaskadierung der Strahlteilung vorgesehen sein.

In besonders bevorzugter Ausführungsform sind die Flächendetektoren der Kamera digital auslesbare Detektoren, insbesondere CCD- oder CMOS-Detektoren, so daß es sich bei der erfindungsgemäßen Kamera um eine digitale, opto-elektronische (kurz optronische) Kamera handelt. Solche Flächendetektoren können z.B. sein:
- CCD-, CMOS im Visuellen,
- CCD mit Micro-channel Bildverstärker im UV,
- Pt:Si, IR-CMOS Si/CMT, Quantum Well-, Si/InSb, ferro-elektrische, bolometrische oder sonstige ungekühlte Detektoren im infraroten Spektralbereich.

Von besonderem Vorteil ist es, wenn ein digital auslesbarer Flächendetektor aus mehreren, nebeneinander angeordneten und parallel auslesbaren, insbesondere streifenförmigen Detektoren zusammengesetzt ist. Diese einzelnen Detektoren können monolithisch oder optisch aneinandergereiht sein. Zum Beispiel sind CCDs erhältlich, bei denen bei der Herstellung 1024 x 1024 Elemente (1K x 1K Block) innerhalb der Größe eines Wafers beliebig aneinandergereiht werden können. Diese CCDs, die eine hervorragende Basis für große Flächendetektoren (maximal sind bei den jetzigen Wafers 7K x 9K möglich) bieten, liefern auch eine günstige Architektur für streifenförmige Detektoren. Die optimale Auslegung wird durch die gewünschte, maximal hohe Auslesegeschwindigkeit vorgegeben. Diese wird erreicht, wenn jedem 1K x 1K Block ein Ausleseregister zugeordnet wird. Es sind auch längere Register möglich, die typischerweise halb so lang sind wie der Detektor; bei einem 3K Detektor also 1,5K. Wird ein Bildformat passend zu existierenden Objektiven der professionellen 6 x 6 Formate gewählt, so können zwei Streifendetektoren mit 2K Breite bei einer Länge von insgesamt 2 x 3K = 6K untergebracht werden. Dies bedeutet bei diesem Bildformat ein Aspektverhältnis von 1:3 bei einer maximalen Bildfolgefrequenz von 20 Vollbildern pro Sekunde (bei diesem Detektor). Die Parallelarchitektur der Streifendetektoren ermöglicht eine hohe Bildwiederholrate durch schnelles Auslesen über mehrere, parallele (typischerweise vier) Ausgänge. Es kann eine parallele Auslesestruktur mit einem oder mehreren Ausgängen pro Detektor, typisch in verteilten Bus-Systemen, wie z.B. der Fibrechannel-Architektur, Verwendung finden. Die ausgelesenen Daten können in parallel angeordneten Datenträgersysteme wie z.B. Magnetplatten in RAID-Systemen gespeichert werden bzw. in verteilten Bus-Systemen und parallel angeordneten Speichermedien (Magnetplatte, Magnetband, optisches Band, Magnetkassette, MO, CD, DVD) parallel ausgelesen werden.

Die Bildaufnahme mit Flächendetektoren erfordert das Stillhalten des Bildes auf dem Detektor für die einige Millisekunden dauernde Aufnahme. Danach wird der Verschluß geschlossen, das Bild ausgelesen und gewartet, bis die nächste Aufnahmeposition erreicht ist. Der entscheidende Punkt für ein extrem schnelles FMC-Verhalten ist einerseits die Aufnahme eines möglichst großen Bildfelds in Flugrichtung, andererseits eine opto-mechanische und/oder elektronische FMCAusgleichseinrichtung, die es ermöglicht, die schnelle FMC-Bewegung in eine Folge von einzelnen Standbildern zu verwandeln. Als opto-mechanische FMC-Ausgleichseinrichtung können vor oder nach dem Objektiv entgegen der Flugrichtung bewegte Spiegel, z.B. ein Richtspiegel oder eine Spiegelradwalze, vorgesehen werden. Alternativ wäre es möglich, auch eine Bewegung des Detektors in der Bildebene, z.B. durch einen Schlitten in der Fokalebene vorzunehmen. Derartige Verfahren ähneln dem Aufbau eines Fotokopierers oder Flachbettscanners. Speziell für CCDs (Full Frame, Frame Transfer oder speziell CCD-Zeilendetektoren, die mit TDI ausgerüstet und damit eigentlich auch Flächendetektoren sind) kann eine (Fein-) Stabilisierung mit Hilfe eines elektronischen FMC über Time Delayed Integration (TDI), d.h. einer elektronischen Verschiebung der Ladungsträgerwolke, vorgesehen sein. In diesem Fall kann ggfs. die Vorkompensation entfallen.

Zur Aufnahme von in oder quer zur Flugrichtung hinter- bzw. nebeneinander liegenden Sehfeldern können in der Kamera mindestens zwei Objektive vorgesehen sein, die z.B. gegeneinander entsprechend verkippt sind.

Die Erfindung betrifft auch ein Kamerasystem mit mindestens zwei Kameras, wie sie oben beschrieben sind. Mit einem solchen Kamerasystem kann ein entsprechend größeres Sehfeld abgedeckt und ein größeres v/h-Verhältnis erzielt werden. Durch die Bildbewegung bei der Aufnahme aus Flugzeugen ergibt sich eine Vorzugsrichtung entsprechend der Bildwanderung, die dazu genutzt werden kann, Detektorkosten zu sparen. Daher ist ein Streifenformat im Aspektverhältnis von 1:1 - 1:3 besonders günstig. Die Detektoren können monolithisch oder optisch aneinandergereiht sein.

Zur Vergrößerung des Sehfeldes in Flugrichtung sind vorteilhaft mindestens zwei Kameras nebeneinander so gekoppelt angeordnet, daß ihre Sehfelder, in Flugrichtung gesehen, am Boden möglichst aneinandergrenzen. Zum Beispiel können die Kameras in Flugrichtung gegeneinander verkippt sein.

Um die Winkelabdeckung zur Seite zu vergrößern, sind mindestens zwei Kameras zur Aufnahme von quer zur Flugrichtung nebeneinander liegenden Sehfeldern ausgerichtet, insbesondere quer zur Flugrichtung gegeneinander verkippt. Auch in einer Kamera bzw. einem Objektiv können mehrere Detektoren quer zur Flugrichtung gruppiert sein.

In bevorzugter Ausführungsform des Kamerasystems kann ein gemeinsamer Antrieb für die FMC-Ausgleichseinrichtungen der mindestens zwei Kameras vorgesehen sein. Sind die FMC-Ausgleichseinrichtungen z.B. als Spiegel ausgebildet, können diese von einer gemeinsamen Drehachse angetrieben werden, wobei die Spiegel, ebenso wie die Kameras auch, so um einen Winkel verdreht sind, daß die Sehfelder am Boden in Flugrichtung möglichst aneinandergrenzen. Die seitlich nebeneinander oder hintereinander liegenden Kameras können bzw. müssen mit unterschiedlichen FMC-Geschwindigkeiten angesteuert sein. Hierfür muß eine geeignete Synchronisierung zur Plazierung der Aufnahmen am Boden vorgesehen sein.

Die Erfindung betrifft in einem weiteren Aspekt auch ein Verfahren zum Aufnehmen von Luftbildern aus Flugzeugen, insbesondere mittels einer oder mehrerer Kameras, bei dem in Flugrichtung hintereinander liegende Sehfelder jeweils mit in Flugrichtung entsprechend ausgerichteten, insbesondere gegeneinander verkippten Kameras bzw. in einer Kamera vorgesehenen Objektiven gleichzeitig aufgenommen werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform der erfindungsgemäßen Luftbildkamera mit einem Strahlteiler und zwei Flächendetektoren;
- Fig. 2: eine zweite Ausführungsform der erfindungsgemäßen Luftbildkamera mit drei Strahlteilern und vier Flächendetektoren;
- Fig. 3: schematisch einen in einzelne Bereiche unterteilten streifenförmigen CCD-Detektor;
- Fig. 4: eine der Luftbildkamera vorgeschaltete FMC-Ausgleichseinrichtung in Form einer Spiegelwalze (Fig. 4a) bzw. eines Richtspiegels (Fig. 4b);
- Fig. 5: ein Kamerasystem aus zwei Luftbildkameras und einem gemeinsamen Antrieb für ihre FMC-Ausgleichseinrichtungen in einer Seitenansicht (Fig. 5a) und in einer Draufsicht (Fig. 5b);
- Fig. 6: die Anordnung von drei in Fig. 5 gezeigten Kamerasystemen quer zur Flugrichtung nebeneinander; und
- Fig. 7: die Anordnung von vier FMC-Detektorreihen in der Bildebene einer photogrammetrischen Luftbildkamera (Fig. 7a) und in einer Draufsicht auf die Bildebene (Fig. 7b).

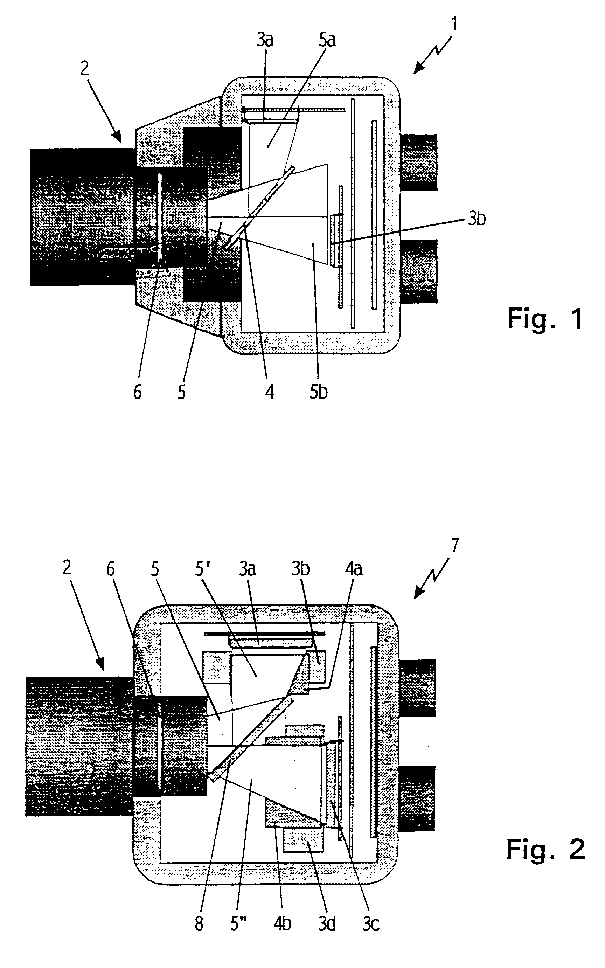

In Fig. 1 ist mit 1 eine digitale optronische Kamera bezeichnet, mit der aus einem Flugzeug Luftbilder digital aufgenommen werden können.

Die Kamera 1 umfaßt ein Objektiv 2, zwei digitale Flächendetektoren 3a, 3b und einen im Strahlengang zwischen dem Objektiv 2 und den beiden Flächendetektoren 3a, 3b angeordneten Strahlteiler 4. Dieser Strahlteiler 4 ist entweder als physikalischer Strahlteiler oder als geometrischer Strahlteiler durch eine teilverspiegelte Teilerplatte ausgeführt. Der Strahlteiler 4 teilt das vom Objektiv 2 kommende Lichtbündel 5 bei gleichbleibendem Bündeldurchmesser in zwei Bündelteile 5a und 5b auf. Der eine Flächendetektor 3a wird nur mit der einen Bündelhälfte des Bündelteils 5a, der andere Flächendetektor 3b nur mit der jeweils anderen Bündelhälfte des Bündelteils 5b belichtet, so daß die beiden Flächendetektoren 3a, 3b mit jeweils unterschiedlichen Bündel- bzw. Bildhälften belichtet werden. Weiterhin ist im Strahlengang noch ein Verschluß 6 vorgesehen, der für CCD-Detektoren in Full Frame Technologie erforderlich ist.

Fig. 2 zeigt eine weitere Kamera 7, bei der das vom Objektiv 2 kommende Lichtbündel 5 auf vier Flächendetektoren 3a bis 3d aufgeteilt bzw. zerlegt wird. Dazu wird das Lichtbündel 5 zunächst durch einen geometrischen (ersten) Strahlteiler 8 in zwei Lichtbündelhälften 5' und 5'' unterteilt, die dann, jeweils durch einen physikalischen (zweiten) Strahlteiler 4a bzw. 4b aufgeteilt, auf zwei Detektoren 3a, 3b bzw. 3c, 3d abgebildet werden. Die vier Flächendetektoren 3a bis 3d werden so mit jeweils unterschiedlichen Bildhälften belichtet.

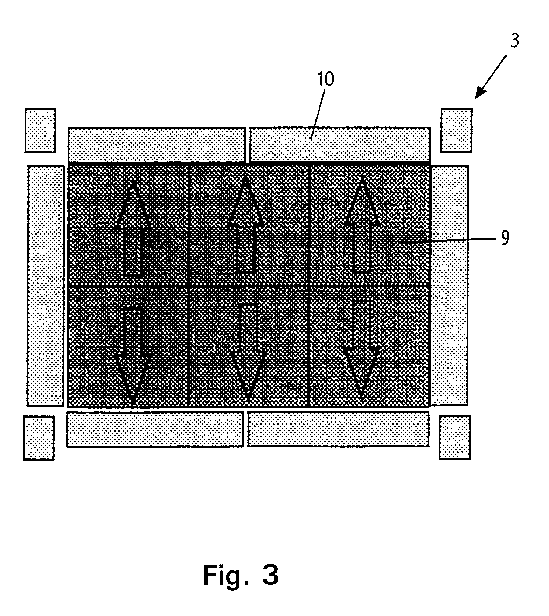

Der in Fig. 3 schematisch dargestellte Flächendetektor 3 ist ein streifenförmiger 3K x 2K CCD-Detektor, der für eine parallele Auslesung in einzelne 1K x 1K-große Detektorbereiche 9 unterteilt ist. Jeder Detektorbereich 9 ist über einen eigenen Ausgang in jeweils ein 1,5K großes Ausleseregister 10 in Richtung auf einen Datenspeicher (nicht gezeigt) auslesbar. Die Flächendetektoren 3a-3d sind vorzugsweise durch Aneinanderreihen von mehreren solcher streifenförmiger Flächendetektoren 3 auf einem Wafer gebildet.

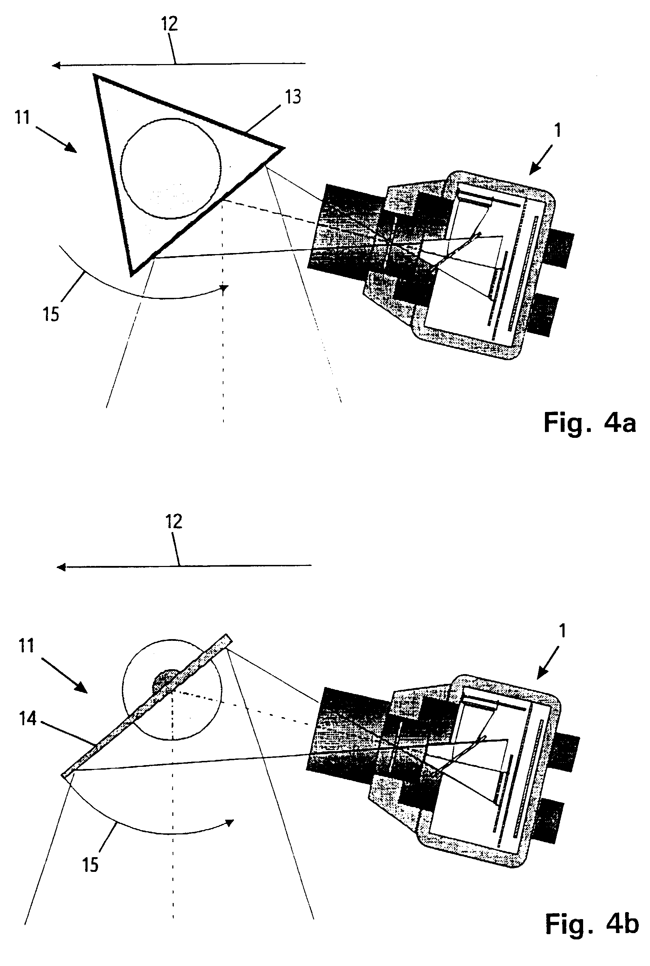

In Fig. 4 ist der Kamera 1 eine FMC-Ausgleichseinrichtung 11 vorgeordnet, die das mit der in Flugrichtung 12 bewegten Kamera 1 aufzunehmende Bild für die Dauer der Aufnahme (einige Millisekunden) stillhält. In Fig. 4a ist die FMC-Ausgleichseinrichtung 11 als Spiegelwalze 13 und in Fig. 4b als Richtspiegel 14 ausgebildet, die sich jeweils in Drehrichtung 15 entgegengesetzt zur Flugrichtung 12 drehen, um das Bild während der Bildaufnahme entsprechend nachzuführen. Danach wird der Verschluß 6 geschlossen, das Bild ausgelesen und gewartet, bis die nächste Aufnahmeposition erreicht ist. Erfolgt die Bildaufnahme mit Frame Transfer CCDs, so ist kein Verschluß erforderlich.

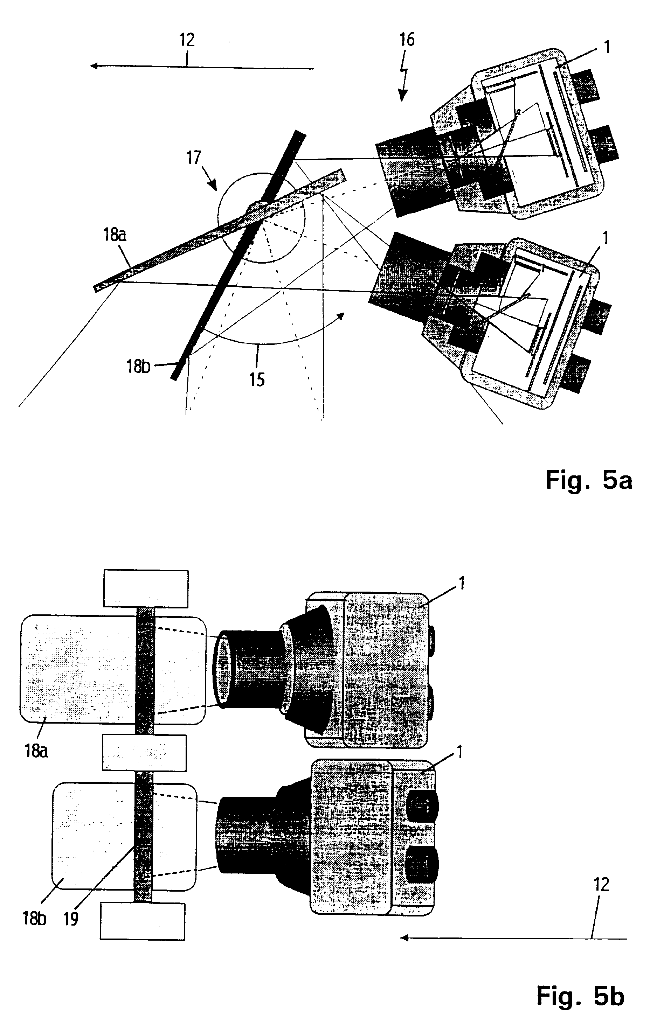

Das in Fig. 5 gezeigte Kamerasystem 16 besteht aus zwei Kameras 1, die in Flugrichtung 12 so gegeneinander verkippt sind, daß ihre Sehfelder, in Flugrichtung 12 gesehen, am Boden aneinander liegen. Beiden Kameras 1 ist eine gemeinsame FMC-Ausgleichseinrichtung 17 in Form zweier Spiegel 18a, 18b vorangestellt, die über eine gemeinsame Drehachse 19 in Drehrichtung 15 angetrieben werden. Die beiden Spiegel 18a, 18b sind, wie die Kameras 1 auch, so um einen Winkel gegeneinander verdreht, daß ihre Sehfelder am Boden in Flugrichtung 12 aneinandergrenzen.

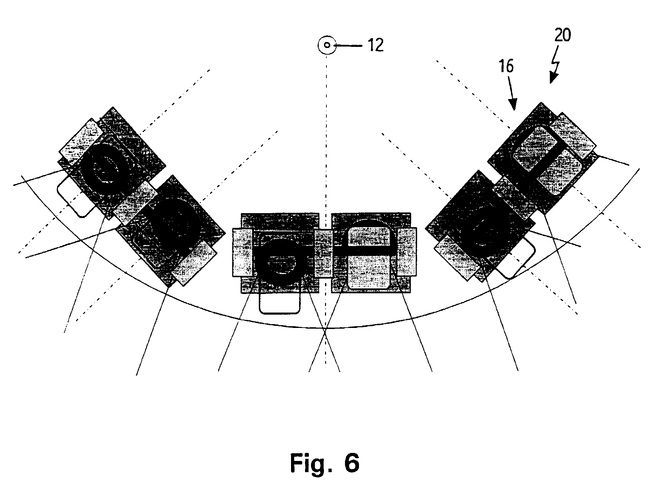

In Fig. 6 ist schließlich noch ein Kamerasystem 20 gezeigt, bei dem drei Kamerasysteme 16 quer zur Flugrichtung 12 nebeneinander angeordnet sind. Die Kamerasystem 16 sind dabei quer zur Flugrichtung 12 gegeneinander jeweils so verkippt, daß ihre Sehfelder am Boden quer zur Flugrichtung 12 aneinandergrenzen.

Es bietet sich an, die Sehfeldvergrößerung für ein möglichst großes v/h in zwei Stufen zu erreichen. Für den mittleren Abstandsbereich wird die Aufklärungskamera 1, 7 mit einer möglichst großen Ausnutzung des Sehfeldbereichs in der Kamera verwendet. Unter den geometrischen Verhältnissen der Schnittweite, in welcher der Strahlteiler untergebracht werden muß, ist bei einem Seitenverhältnis von 1:3 bei einer 6 x 6 cm² Kamera ein mittlerer Entfernungsbereich mit 80 bis 300 mm Brennweite möglich. Die zweite Stufe ist durch die Reihung von mehreren Kameras 1, 7 hintereinander mit in Flugrichtung 12 aneinander grenzenden Sehfeldern erreichbar (Fig. 5). Die seitliche Reihung vergrößert die Winkelabdekkung zur Seite (Fig. 6).

Das in der Fokalebene einer Luftbildkamera genutzte Bildfeld hat typisch eine Größe von 230 x 230 mm². Verwendet man große Detektoren mit mehreren tausend Elementen, so dauert das Auslesen z.B. bei 4K x 7K Größe über 4 parallele Ausgänge schon mindestens eine halbe Sekunde. Um ein genügend großes v/h zu erreichen, müssen also kleinere Detektoren in einer Parallelanordnung verwendet werden. Schon der Übergang zu dem bereits zitierten Detektor mit 2K x 3K Größe erhöht die Bildfolge auf maximal 20 Bilder pro Sekunde.

Um ein Bildfeld mit der genannten Größe mit dem Ziel einer möglichst hohen Bildfolge abzudecken, muß
- das Gesamtfeld in einzelne Teilfelder unterteilt werden, die quer zur Flugrichtung optisch lückenlos aneinander gesetzt sind,
- eine solche Detektorreihe mit einer gemeinsamen FMC-Einrichtung in Form einer Spiegelwalze oder eines Richtspiegels versehen werden,
- das Gesamtfeld in Flugrichtung mit mehreren solchen FMC-Detektorgruppen ausgestattet werden.

Da es nicht möglich ist, auf diese Weise das gesamte Bildfeld optisch dicht abzudecken, müssen zwei (oder mehrere) Aufnahmen gemacht werden, die in Flugrichtung so versetzt sind, daß mit der nachfolgenden Aufnahme die Lücke der vorherigen Aufnahme geschlossen wird. Bei einem optischen Füllfaktor von 50% benötigt man zwei Aufnahmen. Durch diese Mehrfachaufnahme verringert sich der maximal erreichbare v/h-Wert entsprechend; bei 50% Füllfaktor und zwei Aufnahmen bleibt nur noch die Hälfte des vorher möglichen maximalen v/h.

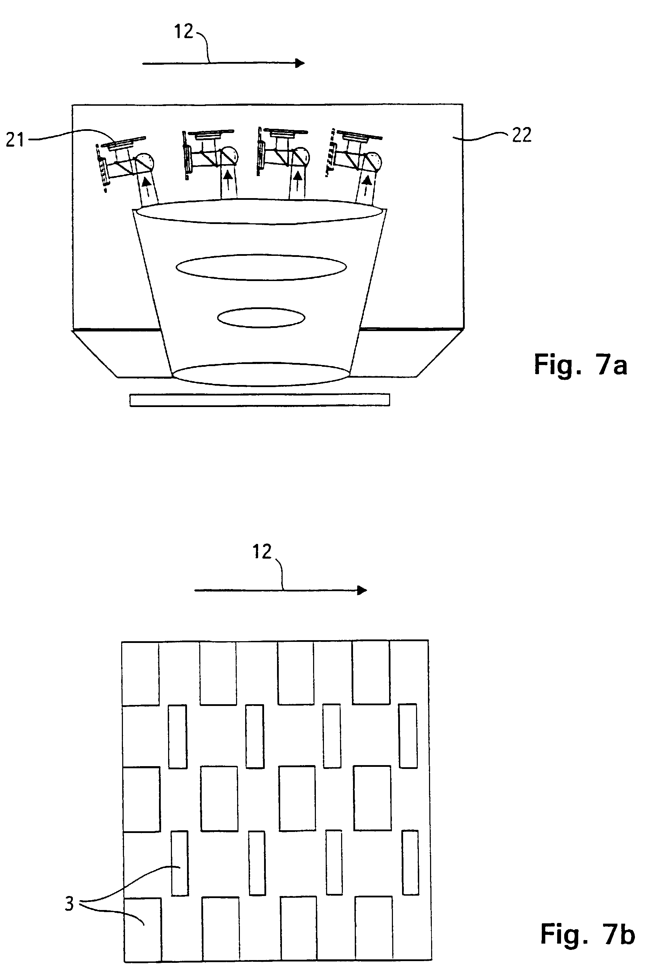

Fig. 7a zeigt im Schnitt schematisch die Anordnung von vier in Flugrichtung 12 hintereinander angeordneten FMC-Detektorreihen 21 in der Bildebene einer photogrammetrischen Luftbildkamera 22, während Fig. 7b die Draufsicht auf die Bildebene bzw. die Detektoren 3 zeigt. Die Detektorreihen 21 in Fig. 7b sind in Form der lichtempfindlichen Fläche dargestellt. Diese liegt durch den Strahlteiler (nicht gezeichnet) alternierend in der Zeichenfläche, oder senkrecht zu ihr. Diese Anordnung entspricht einem Füllfaktor von 50%. Auf die Darstellung der FMC-Einrichtung wurde in dieser Ansicht verzichtet.

Eine digitale Kamera zur Aufnahme von Bildern aus einem Flugzeug mit Blick nach unten. Diese Aufnahmesituation ist gekennzeichnet durch eine Bildwanderung, die senkrecht nach unten am höchsten ist und zur Seite oder nach vorne/hinten abnimmt. Die Kamera hat meist mehrere Objektive mit mehreren Detektoren in einer Fokalebene. Diese Detektoren nehmen durch geometrische und/oder physikalische Strahlteilung Teile des Gesamtbildes so auf, daß die Gesamtszene komplett abgedeckt wird und die Detektoren sich dennoch nicht stören. Hierfür wird in der Regel eine einfache oder kaskadierte Strahlteilung erforderlich sein. Es muß darauf geachtet werden, daß eine Szenenabdeckung auch durch örtliche hintereinander liegenden Anordnung der Detektoren erreicht werden kann, so daß die Flugbewegung dafür sorgt, daß erst nacheinander die ganze Szene abgedeckt wird. Zur Verbesserung der Situation bei der Bildaufnahme werden mehrere Detektoren parallel betrieben, mehrere Ausgänge benutzt, das Sehfeld zur Seite und nach vorne/hinten ausgeweitet. Die notwendige Kompensation der Bildwanderung erfolgt meist kaskadiert: zunächst optomechanisch in einer gemeinsamen Baugruppe oder je einer Baugruppe pro Objektiv (Spiegel, Spiegelwalze oder sich drehendes Prisma), danach elektronisch, wobei die unterschiedliche, verbleibende Bildwanderung typisch für jeden Detektor einzeln und unterschiedlich stark kompensiert wird.

## Patentansprüche

1. Kamera (1; 7), insbesondere zur Aufnahme von Luftbildern aus Flugzeugen, mit einem Objektiv (2), mindestens zwei Flächendetektoren (3a, 3b; 3c, 3d) und mindestens einem, jeweils im Strahlengang zwischen dem Objektiv (2) und den zwei Flächendetektoren (3a, 3b; 3c, 3d) vorgesehenen (zweiten) Strahlteiler (4; 4a; 4b), der das auftreffende Lichtbündel (5; 5'; 5'') in Richtung auf die beiden Flächendetektoren (3a, 3b; 3c, 3d) aufteilt, wobei am einen Flächendetektor (3a; 3c) die eine Lichtbündelhälfte (5a) und am anderen Flächendetektor (3b; 3d) die andere Lichtbündelhälfte (5b) des Lichtbündels (5; 5'; 5'') auftrifft.

2. Kamera nach Anspruch 1, dadurch gekennzeichnet, daß der zweite Strahlteiler (4, 4a, 4b) ein physikalischer Strahlteiler ist, der das Lichtbündel (5; 5'; 5'') in zwei Teile aufteilt, wobei von dem einen Teil die eine Lichtbündelhälfte (5a) auf den einen Flächendetektor (3a) und von dem anderen Teil die andere Lichtbündelhälfte (5b) auf den anderen Flächendetektor (3b) abgebildet wird.

3. Kamera nach Anspruch 1 oder 2, dadurch gekennzeichnet, daß im Strahlengang vor zwei zweiten Strahlteilern (4a, 4b) ein weiterer (erster) Strahlteiler (8) vorgesehen ist, der das auftreffende Lichtbündel (5) auf die beiden zweiten Strahlteiler (4a, 4b) aufteilt.

4. Kamera nach Anspruch 3, dadurch gekennzeichnet, daß der erste Strahlteiler (8) ein geometrischer Strahlteiler ist, der das auftreffende Lichtbündel (5) in eine Lichtbündelhälfte (5') für den einen zweiten Strahlteiler (4a) und in eine Lichtbündelhälfte (5'') für den anderen zweiten Strahlteiler (4b) unterteilt.

5. Kamara nach einem der Ansprüche 1 bis 4, gekennzeichnet durch eine mehrstufige Kaskadierung der Strahlteilung.

6. Kamera nach einem der Ansprüche 1 bis 5, dadurch gekennzeichnet, daß die Flächendetektoren (3a-3d) digital auslesbare Detektoren, insbesondere CCD- oder CMOS-Detektoren, sind.

7. Kamera nach Anspruch 6, dadurch gekennzeichnet, daß ein digital auslesbarer Flächendetektor (3a-3d) aus mehreren, nebeneinander angeordneten und parallel auslesbaren, insbesondere streifenförmigen Detektoren (3) zusammengesetzt ist.

8. Kamera nach einem der Ansprüche 1 bis 7, dadurch gekennzeichnet, daß vor oder nach dem Objektiv (2) eine die Bildwanderung in Flugrichtung (12), insbesondere opto-mechanisch und/oder elektronisch, ausgleichende FMC(Forward Motion Compensation)-Ausgleichseinrichtung (11) vorgesehen ist.

9. Kamera nach einem der Ansprüche 1 bis 8, dadurch gekennzeichnet, daß mindestens zwei Objektive (2) vorgesehen sind, die zur Aufnahme von in oder quer zur Flugrichtung (12) hinter- bzw. nebeneinander liegenden Sehfeldern ausgerichtet, insbesondere gegeneinander verkippt sind.

10. Kamerasystem (16:20) mit mindestens zwei Kameras (1; 7) nach einem der Ansprüche 1 bis 9.

11. Kamerasystem nach Anspruch 10, dadurch gekennzeichnet, daß mindestens zwei Kameras (1; 7) zur Aufnahme von in Flugrichtung (12) hintereinander liegenden Sehfeldern ausgerichtet sind, insbesondere in Flugrichtung (12) gegeneinander verkippt sind.

12. Kamerasystem nach Anspruch 10 oder 11, dadurch gekennzeichnet, daß mindestens zwei Kameras (1; 7) zur Aufnahme von quer zur Flugrichtung (12) nebeneinander liegenden Sehfeldern ausgerichtet sind, insbesondere quer zur Flugrichtung (12) gegeneinander verkippt sind.

13. Kamerasystem nach einem der Ansprüche 10 bis 12, dadurch gekennzeichnet, daß ein gemeinsamer Antrieb für die FMC-Ausgleichseinrichtungen (Spiegel 18a, 18b) der mindestens zwei Kameras (1; 7) vorgesehen ist.
